# FASCICULE DE BREVET EUROPEEN

(11) **EP 3 558 027 B1**
(45) Date de publication et mention de la délivrance du brevet: **28.04.2021**
(21) Numéro de dépôt: 17838046.5
(22) Date de dépôt: 20.12.2017
(51) Int. Cl.: A23K 10/38, A23K 50/10

(54) **PRODUIT AMÉLIORANT LA VALORISATION DES FIBRES DE LA RATION**
PRODUKT ZUR VERBESSERUNG DER VERWERTUNG DER FASERN IN TIERFUTTERMITTELN
PRODUCT FOR IMPROVING THE USE OF FIBRE IN FEED

(30) Priorité: 23.12.2016 FR 1663352
(43) Date de publication de la demande: 30.10.2019
(73) Titulaire: Agro Innovation International, 35400 Saint-Malo (FR)
(72) Inventeur: LAZA-KNOERR, Anca L., 35400 Saint-Malo (FR); ALIS, Yves, 35400 Saint-Malo (FR); ANGLADE, Nicolas M., 35430 Chateauneuf d'Ille et Villaine (FR); DESPREZ, Benjamin, 22980 Plelan le Petit (FR)
(74) Mandataire: Cabinet Beau de Loménie
(86) Numéro de dépôt international: PCT/FR2017/053737
(87) Numéro de publication internationale: WO 2018/115744

(56) Documents cités:
- WO-A1-2015/110663
- WO-A1-2016/075422
- WO-A2-2007/135278
- US-A- 5 260 089
- US-A1- 2016 262 426

## Description

La présente invention concerne le domaine de la nutrition des mammifères non humains, en particulier de la nutrition des ruminants, et de l'amélioration du métabolisme microbien, de la digestion des fibres et donc de l'utilisation des rations.

Parmi les animaux, les herbivores et en particulier les ruminants sont des mammifères qui ont une alimentation à base de fibres de plantes contenant parmi les fibres solubles des fibres insolubles de type celluloses et d'hémicellulose, fibres très peu digestibles.

Le ruminant a la particularité de digérer par l'intermédiaire d'une « cuve de fermentation », le rumen (130- 180 litres) interposé dans la partie antérieure du tube digestif. Le rumen contient une grande variété de microflore des bactéries et des protozoaires, c'est-à-dire une pré-digestion fermentaire obligatoire, prioritaire et très efficace. La flore microbienne conditionne donc la digestibilité des glucides, des protéines, l'auto- approvisionnement en vitamines ou autres nutriments. Bien que le métabolisme microbien les aide à digérer ces fibres, ce n'est parfois pas toujours suffisant, ce qui ne permet pas une utilisation efficace de la ration et donc la quantité d'aliment nécessaire augmente et les couts de production également. Il existe donc un besoin continu d'améliorer la digestibilité des fibres de l'alimentation de ce type d'animaux (ruminants). On conçoit donc tout l'intérêt de tirer parti au mieux de l'originalité digestive des ruminants en stimulant l'activité microbienne et en orientant cette dernière pour qu'elle profite le plus possible à la productivité, à la santé et à la qualité des productions.

Or les inventeurs se sont aperçus de façon surprenante que l'utilisation d'un mélange de co-produits de distillation de céréales ou de fabrication de la bière avec ou sans solubles (DDG et DDGS), de solubles de céréales concentrés (CDS), de fibres prébiotiques, de probiotiques, d'acides aminés, de protéines, d'oméga 3, de lignanes et d'enzymes digestives ayant un impact positif sur la digestion des mammifères non humain, en particulier des herbivores (tels que ruminants, chevaux, lagomorphes). Par exemple, dans le cas des ruminants, on va augmenter la digestibilité de la matière sèche et des fibres, en particulier des fourrages et concentrés, en améliorant l'indice de consommation et/ou l'efficacité alimentaire, en favorisant le gain de poids, en augmentant l'activité de rumination en réduisant l'émission de gaz, en particulier de méthane, en inhibant les protozoaires de la flore, en diminuant la dégradation des protéines et/ou en orientant les fermentations vers la production des acides gras volatils (AGV) et plus spécifiquement vers l'acide propionique. L'acide propionique étant un précurseur de glucose et donc une source d'énergie pour le ruminant. Une diminution de la fourniture en propionate est équivalente à une perte d'énergie ayant un effet négatif sur le bilan énergétique de l'animal.

Il est connu d'utiliser un mélange de co-produits de distillation de céréales ou de fabrication de la bière avec ou sans solubles (DDG et DDGS) et de solubles de céréales concentrés (CDS) dans l'alimentation animale. Le brevet US5260089 décrit ainsi un supplément pour l'alimentation animale sans mélasse destiné à l'alimentation animale comprenant un tel mélange. Toutefois ce brevet indique que seuls des minéraux et des vitamines doivent être ajoutés à ce supplément et préconise l'utilisation de plus de DDG et DDGS que de CDS ou au mieux une quantité équivalente. En outre il ne décrit pas que ces composés puissent avoir un impact sur l'utilisation de la ration de façon à l'améliorer la digestibilité. Il a en outre été prouvé par des essais comparatifs (essai comparatif 1) qu'une composition ne contenant qu'un mélange de co-produits de distillation de céréales ou de fabrication de la bière avec ou sans solubles (DDG et DDGS) et de solubles de céréales concentrés (CDS) n'a pas d'effet significatif sur la concentration en N-NH₃ et sur le pH.

Il est également connu d'après la demande WO201511663 d'utiliser une composition enzymatique présentant des activités enzymatiques cellulasiques, xylanasiques et β-glucanasiques obtenue par fermentation en milieu solide de céréales et/ou de coproduits de céréales et/ou de coproduits d'oléagineux par un champignon filamenteux de type Aspergillus section Nigri, plus particulièrement de type Aspergillus tubingensis, pour améliorer les performances zootechniques d'un ruminant. Toutefois, les essais présentés ne montrent pas un effet significatif ou important sur l'ensilage de maïs ou le foin, aliments très fibreux, en particulier en ce qui concerne les dégagements gazeux par exemple de méthane, lors de la fermentation ruminale et la digestibilité des aliments. Or la composition selon l'invention a un effet bien plus intéressant et important concernant l'orientation des fermentations dans le rumen, même pour des rations à base d'ensilage de maïs et/ou de foin.

La présente invention concerne donc une composition pour la nutrition d'un mammifère non humain comprenant un mélange de co-produits de distillation de céréales ou de fabrication de la bière avec ou sans solubles (DDG et DDGS), de solubles de céréales concentrés (CDS), et un mélange de fibres prébiotiques, de probiotiques, d'acides aminés, de protéines, d'oméga 3, de lignanes et d'enzymes digestives obtenu à partir de blé, d'avoine, de malt d'orge, de lin, de farine de lin et de la levure alimentaire *Saccharomyces cerevisiae,* lesdites céréales étant fermentées à l'aide de ladite levure alimentaire *Saccharomyces cerevisiae.*

Les co-produits de distillation de céréales ou de fabrication de la bière avec ou sans solubles (DDG et DDGS) et les solubles de céréales concentrés (CDS) sont des sous-produits de la fermentation alcoolique des grains telle que la bière et sont en général obtenus par séparation des drèches humides (dont l'alcool a été enlevé) de l'alcool de grain toujours sous forme d'une fraction liquide (contenant les solubles de céréales concentrés) et d'une fraction solide (contenant les co-produits de distillation de céréales). De tels produits sont disponibles commercialement.

De façon avantageuse, les inventeurs se sont aperçus que le ratio massique entre les solubles de céréales concentrés et les co-produits de distillation de céréales ou de fabrication de la bière avec ou sans solubles dans la composition selon l'invention avait un effet particulièrement intéressant lorsqu'il est compris entre 1/1 et 5/1, avantageusement entre 2/1 et 4/1, de façon encore plus avantageuse entre 2,5/1 et 3,5/1. En effet, il est plus intéressant d'avoir une teneur plus importante en solubles de céréales concentrés qu'en co-produits de distillation de céréales ou de fabrication de la bière avec ou sans solubles.

Avantageusement, les solubles de céréales concentrés représentent de 41 à 80%, plus avantageusement de 60 à 79%, en particulier de 65 à 75%, encore plus avantageusement de 68 à 75%, en poids du poids total de la composition. De façon avantageuse, les co-produits de distillation de céréales ou de fabrication de la bière avec ou sans solubles représentent de 15 à 40%, avantageusement de 17 à 35%, en particulier de 20 à 30, encore plus avantageusement de 21 à 28%, en poids du poids total de la composition. Ainsi la composition selon l'invention peut avoir la composition comme indiqué dans le tableau 1 suivant :

**Tableau 1 : Exemples de composition selon l'invention**

| **Composants** | **% en poids** | **% en poids préféré** |
|---|---|---|
| DDG ou DDGS | 41-80 | 50-75 |
| CDS | 15-50 | 21-46 |
| Mélange de fibres prébiotiques, de probiotiques, d'acides aminés, de protéines, d'oméga 3, de lignanes et d'enzymes digestives | Solde à 100 | Solde à 100 |

Avantageusement, les fibres prébiotiques de la composition selon l'invention sont des oligosaccharides ou des polysaccharides, en particulier choisies parmi les arabinogalactans de Mélèze, les transgalactooligosaccharides, les fructanes tels que l'inuline, les oligo fructose tels que les fructo-oligosaccharides (FOS) (en particulier de céréales, telles que l'orge ou le blé), les mannane-oligosaccharides (MOS) (en particulier de *saccharomyces cerevisiae*), les bêta-glucannes (en particulier de céréales telles que avoine, blé et orge, plus particulièrement blé et/ou orge, et/ou de levure en particulier de *saccharomyces cerevisiae,* plus particulièrement il s'agit de bêta-glucannes d'avoine) les arabino-xylo-oligosaccharides(AXOS) (en particulier de céréales telles que le blé), les xylo-oligosaccharides (XOS) (en particulier de céréales telles que le blé), et leurs mélanges, plus avantageusement choisis parmi les fructo-oligosaccharides, l'inuline, les mannane-oligosaccharides, les bêta-glucannes, les arabino-xylo-oligosaccharides, les xylo-oligosaccharides, et leurs mélanges, encore plus avantageusement il s'agit d'un mélange de fructo-oligosaccharides, de mannane-oligosaccharides, de bêta-glucannes, d'arabino-xylo-oligosaccharides et de xylo-oligosaccharides.

Dans un mode de réalisation avantageux, les enzymes digestives de la composition selon l'invention sont choisies parmi les enzymes amylolytiques (en particulier pour l'amidon et le sucre telles que les alpha-amylases, les béta-amylases, les pullulanases et/ou les amyloglucosidases), fibrolytiques (en particulier pour les fibres, telles que les cellulases et/ou les hémicellulases ou xylanases), protéolytiques (en particulier pour les protéines telles que les exopeptidases (ou exoprotéases), les aminopeptidases, les carboxypeptidases et/ou les endopeptidases (ou endoprotéases)) et phospholytiques (en particulier pour les minéraux tel que le phosphore mais aussi l'acide phytique, il s'agit en particulier d'une phytase) et leurs mélanges, avantageusement il s'agit d'un mélange d'enzymes amylolytiques, fibrolytiques, protéolytiques et phospholytiques. Ces enzymes sont en particulier issues du malt d'orge.

Dans un autre mode de réalisation avantageux, les probiotiques de la composition selon l'invention sont choisies parmi le *Saccharomyces cerevisiae,* le *Saccharomyces carlsbergensis,* le *Saccharomyces uvarum,* le *Saccharomyces ludwigi,* le *Kluyveromyces lactis,* le *Torulaspora delbrueckii,* le *Candida utilis*/*Pichia jadini,* le *Brettanomyces spp,* avantageusement il s'agit d'une levure, en particulier d'une levure alimentaire telle que la *Saccharomyces cerevisiae.*

Dans encore un autre mode de réalisation avantageux, les protéines de la composition selon l'invention sont choisies parmi les protéines de blé, les protéines d'avoine, les protéines de lin, les protéines du malt d'orge et leurs mélanges, avantageusement il s'agit d'un mélange de protéines de blé, de protéines d'avoine, de protéines de lin et de protéines du malt d'orge. De façon avantageuse, la teneur en protéine du mélange de fibres prébiotiques, de probiotiques, d'acides aminés, de protéines, d'oméga 3, de lignanes et d'enzymes digestives de la composition selon l'invention est comprise entre 20 et 30% en poids par rapport au poids total de ce mélange.

Parmi les acides aminés de la composition selon l'invention on peut citer en particulier la méthionine et la cystine.

Dans un mode de réalisation avantageux, les lignanes de la composition selon l'invention sont des lignanes de lin, tels que le sécoisolaricirésinol et le matairésinol ou leurs formes glycosylées (diglucosides).

Selon l'invention le mélange de fibres prébiotiques, de probiotiques, d'acides aminés, de protéines, d'oméga 3, de lignanes et d'enzymes digestives utilisable dans la composition selon l'invention est obtenu à partir de blé, d'avoine, de malt d'orge, de lin , de farine de lin et de levure alimentaire. Les céréales sont fermentées à l'aide de la levure alimentaire (*saccharomyces cerevisiae*) pour éliminer l'amidon, concentrer les protéines et produire les fibres prébiotiques, et les enzymes utilisées dans le procédé sont stabilisées pour pouvoir être à nouveau capables d'agir dans le système digestif des animaux avec les métabolites de la croissance de la levure.

La composition selon l'invention peut en outre comprendre un ou plusieurs ingrédients choisis parmi :
- les huiles essentielles, en particulier l'huile essentielle de *Thymus Vulgaris,* avantageusement obtenue à partir du rameau fleuri, plus particulièrement par distillation à la vapeur d'eau, encore plus particulièrement comprenant du Thymol et du para-cymene ;
- les extraits de plantes, tels que l'extrait de châtaignier (*Castanea Sativa Mill*.), en particulier obtenu par extraction par voie aqueuse, avantageusement sans autre solvant, plus particulièrement l'extrait de tannin de châtaignier ;
- les humates tels que la Léonardite ;
- la tourbe ;
- les aluminosilicates (tels que les zéolithes ou les argiles) ;
- le tannin, tel que des tannins de châtaignier (*Castanea Sativa Mill*), en particulier estérifiés et glycosiques, plus particulièrement obtenus par extraction aqueuse, en particulier sans autre solvant ;
- la graine de lin ;
- les polyphénols ;
- les saponines, avantageusement les saponines stéroïdiques et/ou triterpéniques, en particulier issues des plantes *Quillaja saponaria, Trigonella foenum graecum, Yucca schidigera, Chenopodium quinoa,* et/ou *Camelia SP* tel que le FIX'N commercialisé par NOR-FEED;
- les algues tels que microalgues comme la spiruline ou des macroalgues par exemple vertes, rouges ou brunes, leurs mélanges ;
- les extraits d'algues ;
- le produit de la fermentation *d'Aspergillus oryzae* en particulier *d'Aspergillus oryzae* NRRL 458, plus particulièrement contenant l'Endo-1,4-bêta-glucanase EC 3.2.1.4 et l'Alpha-amylase EC 3.2.1.1 tel que l'AMAFERM commercialisé par ZOOTECH ;
et un mélange de ces ingrédients.

La composition selon l'invention peut ainsi comprendre des huiles essentielles, des extraits de plantes, de la Léonardite, de la tourbe et/ou des aluminosilicates (tels que les zéolithes ou les argiles).

Elle peut aussi comprendre du tannin, de la graine de lin, des polyphénols, et/ou des saponines.

Elle peut en outre comprendre des algues et/ou des extraits d'algues tels que microalgues comme la spiruline ou des macroalgues par exemple vertes, rouges ou brunes.

De façon avantageuse, elle comprend des saponines en particulier en une teneur comprise entre 5 et 15% en poids par rapport au poids total de la composition. Ces saponines sont avantageusement des saponines stéroïdiques et/ou triterpéniques, en particulier issues des plantes *Quillaja saponaria, Trigonella foenum graecum, Yucca schidigera, Chenopodium quinoa,* et/ou *Camelia SP.*

En effet, la propriété intrinsèque des saponines étant la lyse ciblée des protozoaires dans le rumen, il s'ensuit une modulation des fermentations ruminales conduisant en bout de chaîne à : une diminution de la concentration en NH₃ du rumen et donc une meilleure valorisation de l'azote alimentaire du métabolisme azoté vers plus de protéosynthèse et une diminution du rapport acétate (C2) / propionate (C3) conduisant à une optimisation du métabolisme énergétique.

De façon avantageuse, elle comprend de l'extrait de châtaignier (Castanea Sativa Mill.), en particulier obtenu par extraction par voie aqueuse, avantageusement sans autre solvant, plus particulièrement l'extrait de tannin de châtaignier.

De façon avantageuse, elle comprend de l'huile essentielle de *Thymus Vulgaris,* avantageusement obtenue à partir du rameau fleuri, plus particulièrement par distillation à la vapeur d'eau, encore plus particulièrement comprenant du Thymol et du para-cymene.

De façon avantageuse, elle comprend des humates, en particulier de la léonardite, avantageusement à une teneur comprise entre 1 et 100g/j.

De façon avantageuse elle comprend le produit de la fermentation *d'Aspergillus oryzae,* en particulier *d'Aspergillus oryzae* NRRL 458, plus particulièrement contenant l'Endo-1,4-bêta-glucanase EC 3.2.1.4 et l'Alpha-amylase EC 3.2.1.1, tel que l'AMAFERM commercialisé par ZOOTECH. L'AMAFERM contient ainsi non seulement le produit de la fermentation *d'Aspergillus oryzae* en une teneur en poids de 4-5 % (Endo-1,4-bêta-glucanase EC 3.2.1.4: 3 IU(1)/g; Alpha-amylase EC 3.2.1.1: 40 IU (2)/g) mais également 94-95 % en poids de son de blé et 1 % en poids de grenaille inoxydable contenant 5 % en poids de carbonate de cobalt. De façon avantageuse, la teneur en produit de la fermentation *d'Aspergillus oryzae* de la composition selon l'invention est comprise entre 0,5 et 10g/j, en particulier entre 0,5 et 3g/j, plus particulièrement entre 1 et 2g/j.

La composition selon la présente invention est destinée à la nutrition des mammifères non humains, en particulier des herbivores (tels que ruminants, chevaux, lagomorphes) et plus particulièrement des ruminants. Les ruminants incluent par exemple les bovins, les ovins, les caprins, les cervidés et les camélidés.

Par "bovin" on entend au sens de la présente invention une sous-famille des bovidés comprenant plusieurs espèces importantes d'animaux d'élevage. Les bovins incluent en particulier la vache, en particulier la vache laitière, la vache allaitante, la génisse, le veau, le broutard, le taurillon, le bœuf, le bœuf à l'engrais, le taureau, le buffle, le yack, le gayal et le banteng.

Par "ovin", on entend au sens de la présente invention les herbivores ruminants du genre Ovis. Les ovins incluent en particulier le mouflon, le mouton, la brebis, la vacive et l'agneau.

Par "caprin", on entend au sens de la présente invention les herbivores ruminants du genre Capra. Les caprins incluent en particulier la chèvre, le bouc, le chevreau et le bouquetin.

Par "cervidé", on entend au sens de la présente invention les ruminants de la famille des Cervidae, portant des bois. Les cervidés incluent en particulier, le cerf, le hère, le daguet, la biche, le faon, le chevreuil, le brocard, la chevrette, le renne, le daim, la daine et l'élan.

Par "camélidé", on entend au sens de la présente invention des mammifères artiodactyles de la famille des Camelidae. Les camélidés incluent en particulier le dromadaire, le chameau, la chamelle, le lama et l'alpaga.

Dans un mode de réalisation avantageux, le ruminant selon l'invention est un bovin, en particulier, il est choisi parmi la vache, en particulier la vache laitière, le veau, le broutard, le veau sous la mère, le bœuf et le bœuf à l'engrais et plus particulièrement de préférence la vache laitière.

Dans un mode de réalisation particulièrement avantageux, le ruminant est un animal d'élevage.

La composition selon l'invention peut avoir toute forme appropriée pour l'alimentation des mammifères non humains, tels que des herbivores (par exemple ruminants, chevaux, lagomorphes), en particulier une forme solide, une forme de poudre ou de granulé.

Elle peut être ajoutée directement dans la ration des mammifères non humains, en particuliers des herbivores (tels que ruminants, chevaux, lagomorphes) ou être ajoutée à des prémix ou compléments alimentaires ou à des blocs ou seaux nutritionnels.

Dans un mode de réalisation avantageux, elle est ajoutée à la ration journalière du mammifère non humain, avantageusement à raison de 40 à 50 g de composition pour 1 kg de ration.

Cette ration peut être par exemple composée de fourrages de tous types et sous toutes leurs formes (verts, déshydratés, ensilés, agglomérés, etc) comme l'herbe et les autres graminées fourragères, les céréales fourragères (orge, maïs, avoine, blé, sorgho, soja, seigle), les légumineuses (pois, féverole, lupin, soja, luzerne, sainfoin, trèfles), les racines, tubercules et leurs sous-produits (betteraves, pulpe de betteraves, pomme de terre, pulpe de pomme de terre, etc), le chou, le colza, le tournesol, les déchets de végétaux (fanes, rafles, balles de céréales, son, épis de maïs égrenés, bagasse) et les fécules, les sous-produits d'industrie agro-alimentaire (amidonnerie, féculerie, éthanolerie, brasserie, meunerie, etc), ainsi que des tourteaux de graines oléagineuses, des sirops, et des matières alimentaires azotées telles que l'urée et ses dérivés (biuret, uréides) et les sels ammoniacaux.

De préférence, la ration appropriée pour les ruminants selon l'invention comprend des fourrages, de préférence de l'ensilage de maïs représentant typiquement de 10 à 50% de la matière sèche ingérée, de préférence quotidiennement, associé de préférence à d'autres fourrages tels que du foin, de la paille ou de l'ensilage d'herbe ou de céréales et complémenté de préférence par des aliments concentrés tels que des céréales, des tourteaux d'oléagineux ou des aliments composés.
En particulier il s'agit d'un mélange d'ensilage de maïs, de foin et de concentrés (constitué par exemple de blé, maïs, d'orge, de pulpe de betterave, de son de blé et de mélasse), par exemple en un ratio 50 :30 :20, ou de de foin, de concentré et d'amidon de maïs, par exemple à un ratio 77 :9 :12 :2.

Dans un autre mode de réalisation avantageux, la composition selon la présente invention est ajoutée à un seau nutritionnel.
Dans un mode de réalisation avantageux, la consommation journalière du mammifère suivant les tests terrain sur les vaches laitières est à raison de 120 à 150 g de composition/mammifère.

La présente invention concerne donc également un seau nutritionnel pour un mammifère non humain, en particulier un ruminant tel que décrit ci-dessus, comprenant 20 à 30% en poids de la composition selon l'invention par rapport au poids total du seau.
Le seau nutritionnel peut comprendre en outre des additifs bien connus de l'homme du métier tels que du phosphate monocalcique, une source de sodium (chlorure de sodium et/ou sulfate de sodium), une source de calcium (par exemple du carbonate de calcium ou du carbonate de calcium et de magnésium), une source de magnésium (par exemple de l'oxyde de magnésium et/ou du carbonate de calcium et de magnésium, du sulfate de magnésium), des oligo-éléments, et éventuellement des vitamines.

En particulier, la vitamine ou le mélange de vitamines est choisi dans le groupe consistant en la vitamine A, la vitamine D2, le 25-hydroxycalciférol, la vitamine D3, le bêta-carotène, la vitamine E, la vitamine K, la vitamine B1, la vitamine B2, la vitamine B6, la vitamine B12, la vitamine C, d'acide pantothénique, la vitamine PP, la vitamine B9, la vitamine H2, B7 ou BW, la choline, l'inositol, la carnitine, la bétaine, et la taurine, plus particulièrement la vitamine A, la vitamine E et la vitamine D3. Avantageusement l'oligoélément ou le mélange d'oligoéléments est choisi dans le groupe consistant en le carbonate ferreux, le chlorure ferreux tétrahydraté, le chlorure ferrique hexahydraté, le citrate ferreux hexahydraté, le fumarate ferreux, le lactate ferreux tétrahydraté, l'oxyde ferrique, le sulfate ferreux monohydraté, le sulfate ferreux heptahydraté, le chélate ferreux d'acides aminé, hydraté, le chélate de fer de glycine, hydraté, le pidolate de fer, l'iodate de calcium hexahydraté, l'iodate de calcium anhydre, l'iodure de sodium, l'iodure de potassium, l'acétate de cobalt tétrahydraté, le carbonate basique de cobalt monohydraté, le carbonate de cobalt hexahydraté, le chlorure de cobalt hexahydraté, le sulfate de cobalt heptahydraté, le sulfate de cobalt monohydraté, le nitrate de cobalt hexahydraté, le pidolate de cobalt, l'acétate cuivrique monohydraté, le carbonate basique de cuivre monohydraté, le chlorure cuivrique dihydraté, le méthionate de cuivre, l'oxyde cuivrique, le sulfate cuivrique pentahydraté, le chélate cuivreux d'acides aminés, hydraté, le chélate cuivreux de glycine, hydraté, le chélate de cuivre de l'hydroxy-analogue de méthionine, le pidolate de cuivre, le carbonate manganeux, le chlorure manganeux tétrahydraté, le phosphate acide de manganèse trihydraté, l'oxyde manganeux, l'oxyde manganique, le sulfate manganeux tétrahydraté, le sulfate manganeux monohydraté, le chélate de manganèse d'acides aminés, hydraté, le chélate de manganèse de glycine, hydraté, le chélate de manganèse de l'hydroxy-analogue de méthionine, le pidolate de manganese, le lactate de zinc trihydraté, l'acétate de zinc dihydraté, le carbonate de zinc, le chlorure de zinc monohydraté, l'oxyde de zinc, le sulfate de zinc heptahydraté, le sulfate de zinc monohydraté, le chélate de zinc d'acides aminés, hydraté, le chélate de zinc de glycine, hydraté, le chélate de zinc de l'hydroxy-analogue de méthionine, le pidolate de zinc, le molybdate d'ammonium, le molybdate de sodium, le sélénite de sodium, le sélénate de sodium et/ou un mélange de ceux-ci.

De façon avantageuse le seau nutritionnel selon l'invention ne contient pas de mélasse.

De façon particulièrement avantageuse, le seau nutritionnel selon l'invention comprend entre 4 et 9% de co-produits de distillation de céréales ou de fabrication de la bière avec ou sans solubles, avantageusement entre 5 et 7%, en poids par rapport au poids total du seau, et entre 12 et 24% de solubles de céréales concentrés, avantageusement entre 15 et 20%, en poids par rapport au poids total du seau.

La présente invention concerne en outre l'utilisation de la composition de l'invention ou d'un seau nutritionnel selon l'invention, pour améliorer les performances zootechniques d'un mammifère non humain, en particulier des herbivores (tels que ruminants, chevaux, lagomorphes), plus particulièrement d'un ruminant.
Elle concerne en outre l'utilisation de la composition selon l'invention ou d'un seau nutritionnel selon l'invention, pour augmenter la digestibilité de la matière sèche et des fibres, en particulier des fourrages et concentrés, et/ou améliorer l'indice de consommation et/ou l'efficacité alimentaire et/ou favoriser le gain de poids et/ou augmenter l'intensité de la fermentation et du métabolisme microbien et/ou réduire l'émission de gaz, en particulier de méthane, et/ou inhiber les protozoaires de la flore et/ou diminuer la dégradation des protéines et/ou orienter les fermentations vers la production des acides gras volatils (AGV), en particulier vers l'acide propionique chez un mammifère non humain, avantageusement chez un ruminant.
Elle concerne enfin l'utilisation de la composition selon l'invention ou d'un seau nutritionnel selon l'invention, pour augmenter la productivité, la qualité des productions et maintenir la bonne santé des animaux de type ruminants.

L'invention sera mieux comprise à la lumière de la description des figures et des exemples qui suivent qui sont donnés à titre indicatif.
La Figure 1 représente le volume de gaz total produit en ml/g de matière sèche (MS) en fonction du temps de fermentation (en heures) pour une ration hiver pour le témoin - et la composition selon l'invention (Mix 3.0 : exemple 2).
La Figure 2 représente le volume de gaz total produit en ml/g de matière sèche (MS) en fonction du temps de fermentation (en heures) pour une ration pâturage pour le témoin - et la composition selon l'invention (Mix 3.0 + Fix N : exemple 3).
La Figure 3 représente le volume de CH₄ produit après 24h de fermentation en ml/g de matière sèche (MS) pour une ration hiver pour le témoin - et la composition selon l'invention (Mix 3.0 : exemple 2).
La Figure 4 représente le volume de CH₄ produit après 24h de fermentation en ml/g de matière sèche (MS) pour une ration pâturage pour le témoin - et la composition selon l'invention (Mix 3.0 + Fix N : exemple 3).
La Figure 5 représente l'évolution du pH au cours de la fermentation (après 6h ou 24h de fermentation) pour une ration hiver pour le témoin - et la composition selon l'invention (Mix 3.0 : exemple 1 après 6h et exemple 2 après 24h).
La Figure 6 représente l'évolution du pH au cours de la fermentation (après 6h ou 24h de fermentation) pour une ration pâturage pour le témoin - et la composition selon l'invention (Mix 3.0 + Fix N : exemple 3)
La Figure 7 représente l'évolution de la population de protozoaire (10⁵/ml) lors de la fermentation (après 6h ou 24h de fermentation) pour une ration hiver pour le témoin - et la composition selon l'invention (Mix 3.0 : exemple 1 après 6h et exemple 2 après 24h).
La Figure 8 représente l'évolution de la population de protozoaire (10⁵/ml) lors de la fermentation (après 6h ou 24h de fermentation) pour une ration pâturage pour le témoin - et la composition selon l'invention (Mix 3.0 + Fix N : exemple 3).
La Figure 9 représente l'évolution de la concentration en acide propionique (C3) en g/l lors de la fermentation (après 6h ou 24h de fermentation) pour une ration hiver pour le témoin - et la composition selon l'invention (Mix 3.0 : exemple 1 après 6h et exemple 2 après 24h).
La Figure 10 représente l'évolution de la concentration en acide propionique (C3) en g/l lors de la fermentation (après 6h ou 24h de fermentation) pour une ration pâturage pour le témoin - et la composition selon l'invention (Mix 3.0 + Fix N : exemple 3).
La Figure 11 représente l'évolution du ratio C2/C3 lors de la fermentation (après 6h ou 24h de fermentation) pour une ration hiver pour le témoin - et la composition selon l'invention (Mix 3.0 : exemple 1 après 6h et exemple 2 après 24h).
La Figure 12 représente l'évolution du ratio C2/C3 lors de la fermentation (après 6h ou 24h de fermentation) pour une ration pâturage pour le témoin - et la composition selon l'invention (Mix 3.0 + Fix N : exemple 3).
La Figure 13 représente l'évolution de la concentration en azote ammoniacal (N-NH₃) en mg/l lors de la fermentation (après 6h ou 24h de fermentation) pour une ration hiver pour le témoin - et la composition selon l'invention (Mix 3.0 : exemple 1 après 6h et exemple 2 après 24h).
La Figure 14 représente l'évolution de la concentration en azote ammoniacal (N-NH₃) en mg/l lors de la fermentation (après 6h ou 24h de fermentation) pour une ration pâturage pour le témoin - et la composition selon l'invention (Mix 3.0 + Fix N : exemple 3).
La Figure 15 représente le suivi de la digestibilité de la matière sèche (dMS) en % lors de la fermentation (après 6h ou 24h de fermentation) pour une ration hiver pour le témoin - et la composition selon l'invention (Mix 3.0 : exemple 1 après 6h et exemple 2 après 24h).
La Figure 16 représente le suivi de la digestibilité de la matière sèche (dMS) en % lors de la fermentation (après 6h ou 24h de fermentation) pour une ration pâturage pour le témoin - et la composition selon l'invention (Mix 3.0 + Fix N : exemple 3).
La Figure 17 représente le suivi de la digestibilité de l'ADF (dADF) en % lors de la fermentation (après 6h ou 24h de fermentation) pour une ration hiver pour le témoin - et la composition selon l'invention (Mix 3.0 : exemple 1 après 6h et exemple 2 après 24h).
La Figure 18 représente le suivi de la digestibilité de l'ADF (dADF) en % lors de la fermentation (après 6h ou 24h de fermentation) pour une ration pâturage pour le témoin - et la composition selon l'invention (Mix 3.0 + Fix N : exemple 3).
La Figure 19 représente le suivi de la digestibilité du NDF (dNDF) en % lors de la fermentation (après 6h ou 24h de fermentation) pour une ration hiver pour le témoin +, le témoin - et la composition selon l'invention (Mix 3.0 : exemple 1 après 6h et exemple 2 après 24h).
La Figure 20 représente le suivi de la digestibilité du NDF (dNDF) en % lors de la fermentation (après 6h ou 24h de fermentation) pour une ration pâturage pour le témoin - et la composition selon l'invention (Mix 3.0 + Fix N : exemple 3).
La figure 21 représente l'évolution de la concentration en AVG totaux (g/L) lors de la fermentation (après 6h ou 24h ou 48h de fermentation) pour une ration selon la pratique brésilienne pour le témoin et la composition selon l'invention (Amaferm 1g/j + Mix 3.0 : exemple 4 et Amaferm 2g/j + Mix 3.0 : exemple 5).
La Figure 22 représente le volume de CH₄ produit après 24h de fermentation en ml/g de matière sèche (MS) pour une ration test avec les humates pour le témoin et la composition selon l'invention (HA +Mix 3.0 40g/L: exemple 6 ; HA +Mix 3.0 80g/L: exemple 7 et HA +Mix 3.0 120g/L: exemple 8).
La figure 23 représente l'évolution de la concentration en AVG totaux (g/L) lors de la fermentation (après 6h ou 24h de fermentation) pour une ration test avec les humates pour le témoin et la composition selon l'invention (HA +Mix 3.0 40g/L: exemple 6 ; HA +Mix 3.0 80g/L: exemple 7 et HA +Mix 3.0 120g/L: exemple 8).
La Figure 24 représente l'évolution de la concentration en azote ammoniacal (N-NH₃) en mg/l lors de la fermentation (après 6h ou 24h de fermentation) pour une ration hiver pour le témoin et une composition comparative (Mix 2.0 : exemple comparatif 1).
La Figure 25 représente l'évolution du pH au cours de la fermentation (après 6h ou 24h de fermentation) pour une ration hiver ou une ration printemps pour le témoin et une composition comparative (Mix 2.0 : exemple comparatif 1).

### Etude de l'effet de la composition selon l'invention sur les fermentations du rumen et la dégradation de la ration

Les compositions selon l'invention comprenant :
- 71 % de CDS + 25 % de DDGs + 4 % d'un mélange de fibres prébiotiques, de probiotiques, d'acides aminés, de protéines, d'oméga 3, de lignanes et d'enzymes digestives obtenu à partir de blé, d'avoine, de malt d'orge, de lin, de farine de lin, fermentés à l'aide de la levure alimentaire *saccharomyces cerevisiae* (exemple 1) ;
- 71 % de CDS + 26 % de DDGs + 3 % d'un mélange de fibres prébiotiques, de probiotiques, d'acides aminés, de protéines, d'oméga 3, de lignanes et d'enzymes digestives obtenu à partir de blé, d'avoine, de malt d'orge, de lin , de farine de lin, fermentés à l'aide de la levure alimentaire *saccharomyces cerevisiae* (exemple 2) ;
- 41 % de CDS + 40 % de DDGs + 5,5 % d'un mélange de fibres prébiotiques, de probiotiques, d'acides aminés, de protéines, d'oméga 3, de lignanes et d'enzymes digestives obtenu à partir de blé, d'avoine, de malt d'orge, de lin, de farine de lin, fermentés à l'aide de la levure alimentaire *saccharomyces cerevisiae* +13,5% de saponines (FIX'N) (exemple 3) ;
- 42,94% de CDS + 46,075% de DDGs + 5,985% d'un mélange de fibres prébiotiques, de probiotiques, d'acides aminés, de protéines, d'oméga 3, de lignanes et d'enzymes digestives obtenu à partir de blé, d'avoine, de malt d'orge, de lin, de farine de lin, fermentés à l'aide de la levure alimentaire *saccharomyces cerevisiae* +5 % de produit de la fermentation d'*Aspergillus oryzae (AMAFERM 1g*/*j)* (exemple 4).
- 41,132% de CDS + 44,135% de DDGs + 5,733% d'un mélange de fibres prébiotiques, de probiotiques, d'acides aminés, de protéines, d'oméga 3, de lignanes et d'enzymes digestives obtenu à partir de blé, d'avoine, de malt d'orge, de lin, de farine de lin, fermentés à l'aide de la levure alimentaire *saccharomyces cerevisiae* + 9% de produit de la fermentation *d'Aspergillus oryzae (AMAFERM 2g*/*j)* (exemple 5).
- 14,916% de CDS + 16,005% de DDGs + 2,079% d'un mélange de fibres prébiotiques, de probiotiques, d'acides aminés, de protéines, d'oméga 3, de lignanes et d'enzymes digestives obtenu à partir de blé, d'avoine, de malt d'orge, de lin, de farine de lin, fermentés à l'aide de la levure alimentaire *saccharomyces cerevisiae* + 67% d'humates *(*léonardite : HA 40g/L*)* (exemple 6).
- 9,04% de CDS + 9,7% de DDGs + 1,26% d'un mélange de fibres prébiotiques, de probiotiques, d'acides aminés, de protéines, d'oméga 3, de lignanes et d'enzymes digestives obtenu à partir de blé, d'avoine, de malt d'orge, de lin, de farine de lin, fermentés à l'aide de la levure alimentaire *saccharomyces cerevisiae* +80% d'humates *(*léonardite : HA 80g/L*)* (exemple 7).
- 6,328% de CDS + 6,79% de DDGs + 0,882% d'un mélange de fibres prébiotiques, de probiotiques, d'acides aminés, de protéines, d'oméga 3, de lignanes et d'enzymes digestives obtenu à partir de blé, d'avoine, de malt d'orge, de lin, de farine de lin, fermentés à l'aide de la levure alimentaire *saccharomyces cerevisiae* +86% d'humates *(*léonardite : HA 120 g/L*)* (exemple 8).
- 48,7% de CDS + 51,3 % de DDGs (exemple comparatif 1).
ont été testées.

### MATERIEL ET METHODE

L'approche est basée sur la technique de fermentations *in vitro* développée par le laboratoire de Nutrition Animale du Centre Mondial de l'Innovation Roullier. Le principe repose sur l'incubation de jus de rumen frais en mélange avec une salive artificielle préparé au niveau du laboratoire les additifs à tester et les ratios (printemps ou hiver) dans des conditions similaires à la réalité (anaérobiose à 39°, 5C) et sous agitation continue (afin de mimer les mouvements péristaltiques). La flore bactérienne en présence du substrat adapté reproduit les fermentations ruminales ce qui permet de suivre la production de gaz ainsi que les produits terminaux tels que les AGV, le N-NH₃ en fonction des objectifs de l'étude.

Pour évaluer l'effet de la composition selon l'invention sur les fermentations du rumen et la dégradation de la ration, du jus de rumen est prélevé sur 2 vaches fistulées nourries avec une ration à base d'ensilage de maïs, de foin et de concentrés (céréales et tourteaux de soja). Pour reproduire les conditions physiologiques, une ration à base d'ensilage de maïs, de foin et de concentré (50 :30 :20) est mise à incuber dans l'inoculum composé de jus de rumen et de salive artificielle.

Chaque flacon de 100 ml à incuber était composé de :
- 20 ml de jus de rumen filtré
- 40 ml de salive artificielle (pouvoir tampon : Substances tampons :
   carbonate de Na et d'ammonium ; Macro-éléments : Na, P, K et Mg ; Micro-éléments : Ca, Mn, Co et Fe)
- 0,5 g de substrat broyé à 1mm : le substrat peut être une ration hiver ou une ration pâturage ou une ration selon la pratique brésilienne ou une ration printemps ou une ration pour les tests avec les humates:
   ∘ Composition des rations:
   ∘ Ration hiver = 50% ensilage de maïs + 30% de foin + 20% concentré (constitué de 20% blé, 20% maïs, 20% orge, 20% pulpe de betterave, 15% son de blé et 5% mélasse) ;
   ∘ Ration pâturage = 77% de foin + 9% de concentré + 12% d'amidon de maïs + 2% d'urée ;
   ∘ Ration selon la pratique brésilienne : broyée à 1mm et composée de 30% ensilage de maïs + 40% de foin + 20% concentré (constitué de 20% blé, 20% maïs, 20% orge, 20% pulpe de betterave, 15% son de blé et 5% mélasse) + 10% de tourteaux de soja ;
   ∘ Ration printemps : Herbe fraiche congelée (mars 2016)
   ∘ Ration tests avec les humates : broyée à 1mm et composée de 50% ensilage de maïs + 30% de foin + 20% tourteaux de soja.
   L'ajout d'amidon et d'urée permet d'ajuster les valeurs alimentaires de la ration de base pour atteindre les valeurs d'une prairie en début de printemps à savoir 1UFL/kg et 135g de PDIN/kg.
   La ration pâturage et la ration printemps sont extrêmement plus riches en fibres que la ration hiver, la ration selon la pratique brésilienne et la ration tests avec les humates.
- 0,5g d'additifs ou de composition à tester

Le dispositif de l'étude est composé de flacons répartis comme indiqué dans le tableau 2 ci-dessous. Après 6 et 24h et éventuellement 48 h d'incubation à 39,5°C, les flacons sont placés dans la glace pour stopper les réactions. Le pH est mesuré directement à la sortie de l'incubateur avant filtration.

Le substrat est séparé du jus de rumen par centrifugation (20 min à 4 000 tpm) pour récupérer 50 ml de jus destiné au dosage de l'azote ammoniacal et des acides gras volatiles (AGV) dans le milieu. Le substrat récupéré est lyophilisé pendant 48h puis broyé pour les dosages des fibres (Fibres insolubles dans les détergents neutres (NDF) et Fibres insolubles dans les détergents acides (ADF)).

Pour dénombrer la population de protozoaire, un échantillon est dilué au ½ dans une solution de formaldéhyde à 18,75% coloré au bleu de méthylène à 2%. Le dénombrement est réalisé à l'aide d'une Cellule de Malassez et d'un microscope x20.

L'enregistrement continu de la pression dans les flacons permet de déterminer le volume de gaz produit en ml/g de matières sèches (MS). Enfin, sur la purge de chaque module d'enregistrement de la production de gaz, un sac collecteur est adapté afin de récupérer un échantillon pour permettre l'analyse de la composition des gaz produits après 24h d'incubation.

**Tableau 2 : Design expérimental de l'essai**

| **Modalités** | **6h d'incubation 4 répétitions** | **24h d'incubation 4 répétitions** | **48h d'incubation 4 répétitions** |
|---|---|---|---|
| **Témoin négatif** | 60ml d'inoculum + 0,5g substrat | 60ml d'inoculum + 0,5g substrat | 60ml d'inoculum + 0,5g substrat |
| Composition selon l'invention | 60ml d'inoculum + 0,5g substrat + 0,5g **Ex 1 (Mix 3.0)** | 60ml d'inoculum + 0,5g substrat + 0,5g **Ex 2 (Mix 3.0)** | |
| Composition selon l'invention + saponines | 60ml d'inoculum + 0,5g substrat + 0,5g **Ex 3 (Mix 3.0 + Fix'N)** | 60ml d'inoculum + 0,5g substrat + 0,5g **Ex 3 (Mix 3.0 + Fix'N)** | |
| Composition selon l'invention + produit fermentation *Aspergillus oryzae* | 60ml d'inoculum + 0,5g substrat + 0,5g **Ex 4 (Amaferm 1g/j + Mix 3.0)** | 60ml d'inoculum + 0,5g substrat + 0,5g **Ex 4 (Amaferm 1g/j + Mix 3.0)** | 60ml d'inoculum + 0,5g substrat + 0,5g **Ex 4 (Amaferm 1g/j + Mix 3.0)** |
| | 60ml d'inoculum + 0,5g substrat + 0,5g **Ex 5 (Amaferm 2g/j +Mix 3.0)** | 60ml d'inoculum + 0,5g substrat + 0,5g **Ex 5 (Amaferm 2g/j +Mix 3.0)** | 60ml d'inoculum + 0,5g substrat + 0,5g **Ex 5 (Amaferm 2g/j +Mix 3.0)** |
| | 60ml d'inoculum + 0,5g substrat + 0,5g **Ex 6 (HA +Mix 3.0 40g/L)** | 60ml d'inoculum + 0,5g substrat + 0,5g **Ex 6 (HA +Mix 3.0 40g/L)** | |
| Composition selon l'invention + léonardite | 60ml d'inoculum + 0,5g substrat + 0,5g **Ex 7 (HA +Mix 3.0 80g/L)** | 60ml d'inoculum + 0,5g substrat + 0,5g **Ex 7 (HA +Mix 3.0 80g/L)** | |
| | 60ml d'inoculum + 0,5g substrat + 0,5g **Ex 8 (HA +Mix 3.0 120g/L)** | 60ml d'inoculum + 0,5g substrat + 0,5g **Ex 8 (HA +Mix 3.0 120g/L)** | |
| Exemple comparatif | 60ml d'inoculum + 0,5g substrat + 0,5g **Ex Comp 1 (Mix 2.0 18,5g/j)** | 60ml d'inoculum + 0,5g substrat + 0,5g **Ex Comp 1 (Mix 2.0 18,5g/j)** | |

L'exploitation des résultats a été réalisée avec le logiciel de statistique GraphPad Prism 6.

### Suivi de la production de gaz

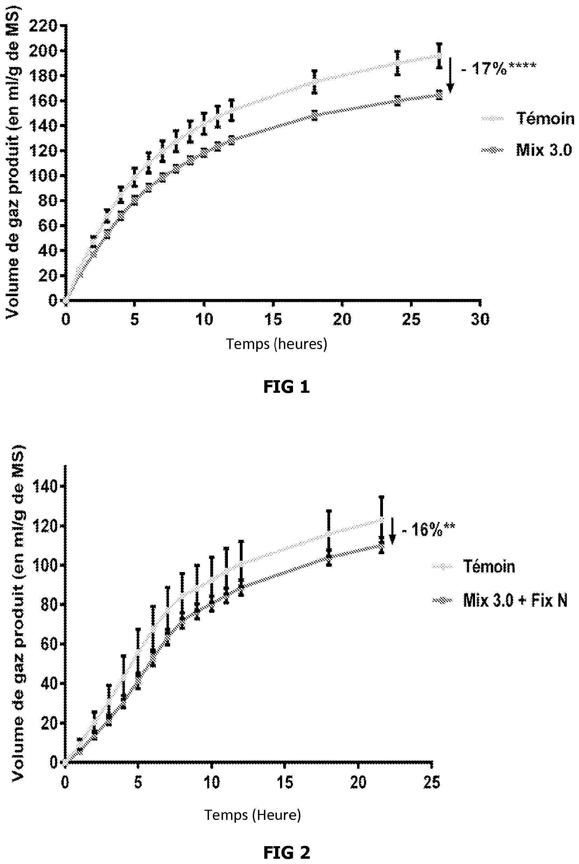

La fermentation du substrat par la flore du rumen entraîne la production de gaz principalement le CO₂ et le méthane (CH₄). Les figures 1 à 4 et 22 présentent le suivi de la production de gaz total et le niveau de CH₄ après 24h ou même 48h de fermentation. Les profils de gaz des 3 modalités sont identiques et conformes à la fermentation d'une ration à base d'ensilage de maïs et de foin (Pell and Schofield, 1993). La complémentation en Mix 3.0 selon l'exemple 2 ou selon l'exemple 3 (Mix 3.0 + Fix N) réduit la production de gaz total (p<0,001). Ces traitements inhibent l'activité fermentaire d'une partie de la flore du rumen.

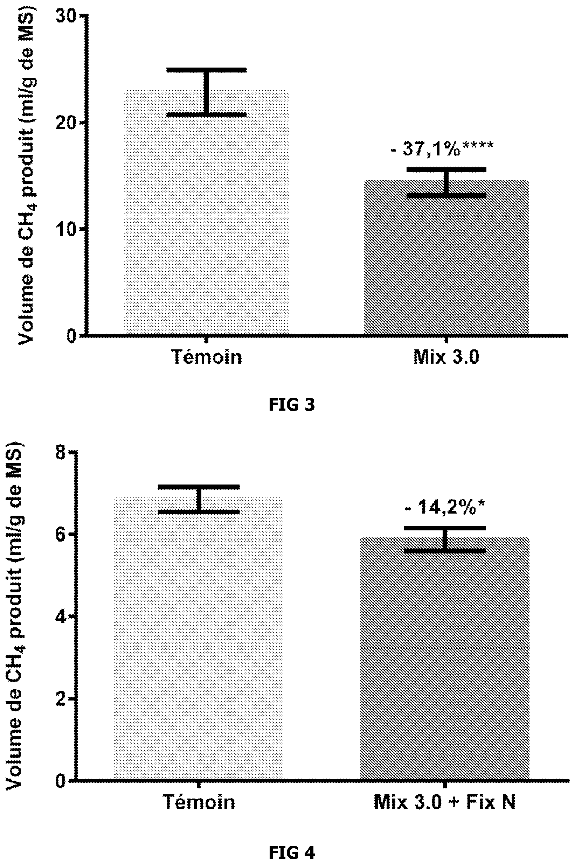

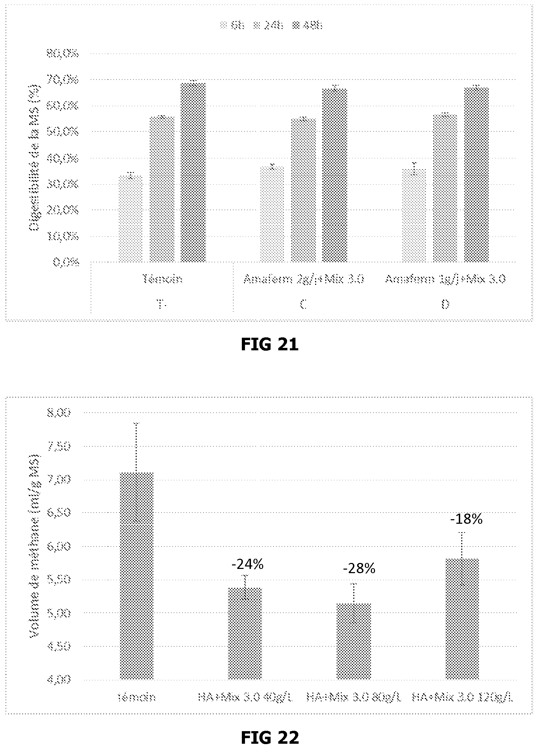

Au cours de la fermentation, la production de CH₄ est réduite par l'ajout des compositions selon l'invention (figure 3 : p<0,001, figure 4 : p<0,0335 et figure 22 : p=0,0650). Cette diminution confirme l'inhibition directe des bactéries méthanogènes et des protozoaires. En effet, l'association de ces 2 familles est responsable de 9 à 25% de la production du CH₄. L'ajout la composition selon l'invention devrait permettre de limiter les pertes d'énergie puisque la production de CH₄ entraîne environ 10% de perte de l'énergie consommée par l'animal.

### Paramètres du jus de rumen et produits de la fermentation

### Suivi du pH

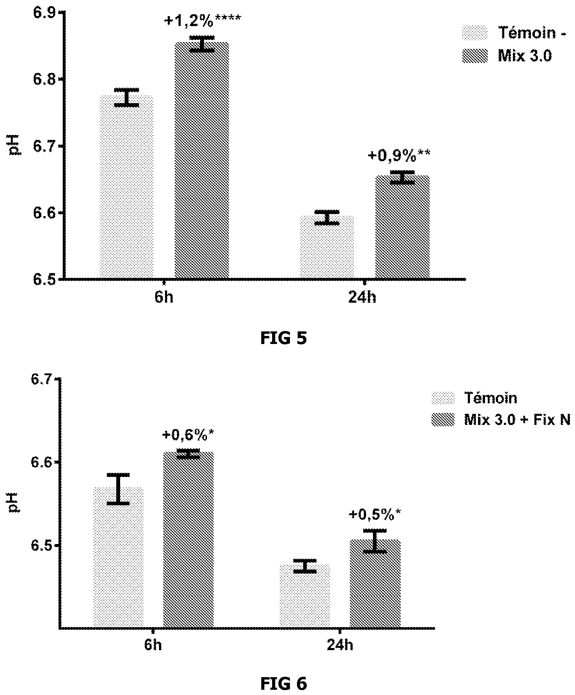

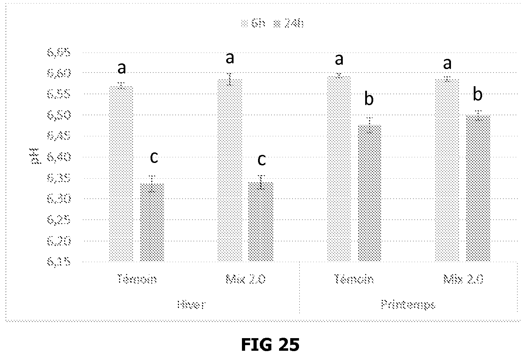

Après 6 et 24h d'incubation le pH du milieu est mesuré (figures 5, 6 et 25). Pour toutes les modalités, la fermentation s'est déroulée en conditions physiologiques avec des valeurs normalement situées entre 6 et 6,9. La composition selon l'invention permet un meilleur maintien du pH malgré la production des AGV lors de la fermentation du substrat par la flore du rumen (p<0,001). En effet, les AGV sont des acides faibles qui réduisent le pH du milieu. Dans ces conditions *in vitro,* la composition selon l'invention réduit la chute du pH et contribue à l'équilibre du rumen permettant ainsi un fonctionnement optimal de la flore et évitant les risques d'acidose. Ceci n'est pas le cas de la composition comparative ne contenant que du CDS et du DDGs (figure 25 : Mix2.0 : exemple comparatif 1) dont les effets sur le pH ne sont pas significatifs.

### Suivi de la population en protozoaires

Le dénombre des protozoaires peut facilement être réalisé par comptage sur cellule de Malassez. Ces cellules disposent d'un quadrillage permettant de déterminer dans un volume connu le nombre de microorganismes. Afin de facilité le comptage, l'échantillon est dilué au ½ dans une solution de formaldéhyde à 18,75% coloré au bleu de méthylène, avec un temps de repos minimum de 4h. Cette solution permet la coloration des différents protozoaires.

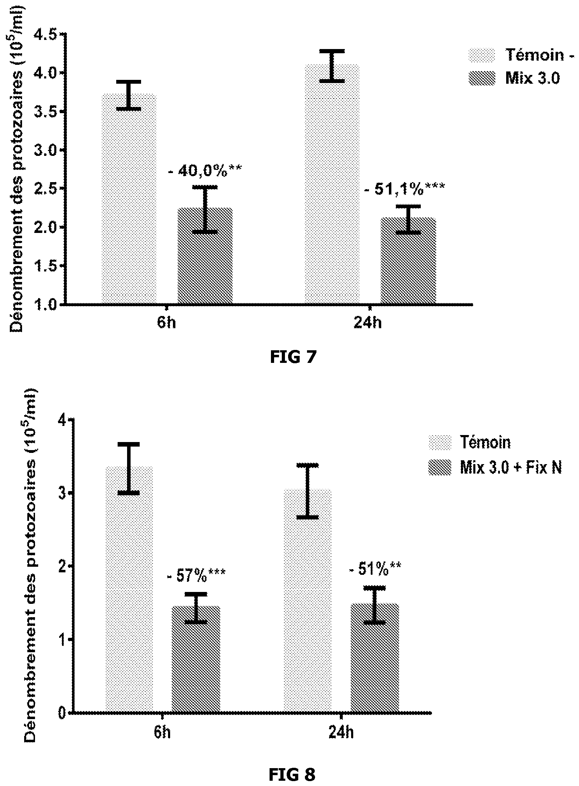

Les protozoaires sont une famille de microorganismes indispensables à l'équilibre ruminai mais qui participent aux pertes d'énergie dues à la production de CH₄. En effet, les bactéries méthanogènes se fixent aux protozoaires. L'une des stratégies utilisées pour réduire les émissions de CH₄ chez le ruminant repose sur la défaunation de la population de protozoaire. La composition selon l'invention réduit significativement le nombre de protozoaires à 6 et 24h (p<0,01) comme le montre les figures 7 et 8. La réduction du CH₄ (cf. figures 3 et 4) est due à l'effet direct du produit sur les protozoaires et donc également sur les bactéries méthanogènes associées.

### Suivi de la production d'AGV

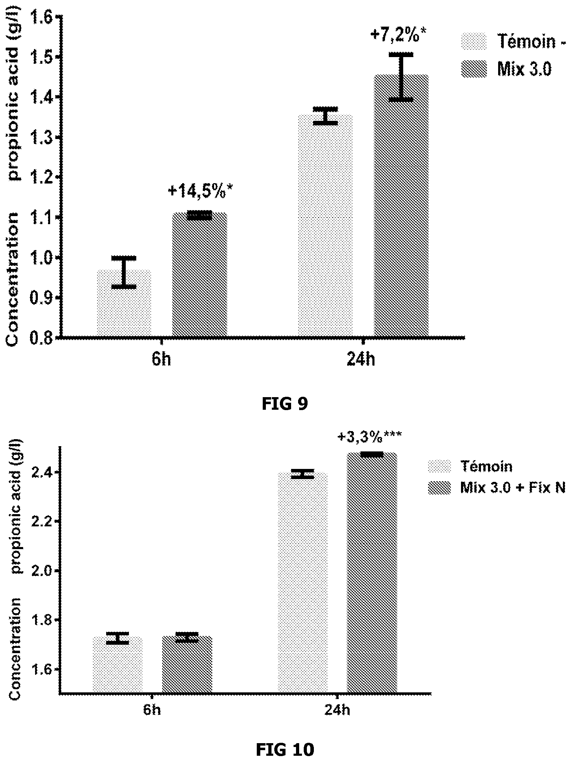

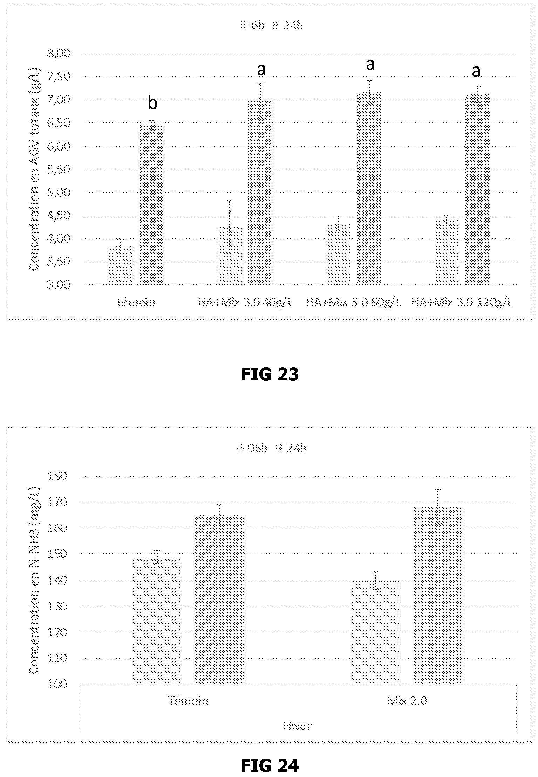

Les figures 9 à 12 présentent l'évolution des concentrations en acide propionique et le ratio C2/C3 au cours de la fermentation. Les figures 21 et 23 présentent l'évolution des concentrations en AVG totaux au cours de la fermentation. La composition selon l'invention augmente significativement la production d'AVG après 6 et 24h de fermentation dans le cas des exemples 6 à 8 (p=0,1384) et après 48h de fermentation dans le cas des exemples 4 et 5 (p=0,0043), ce qui permet l'augmentation de l'énergie disponible pour les productions (lait, viande, croissance,...).

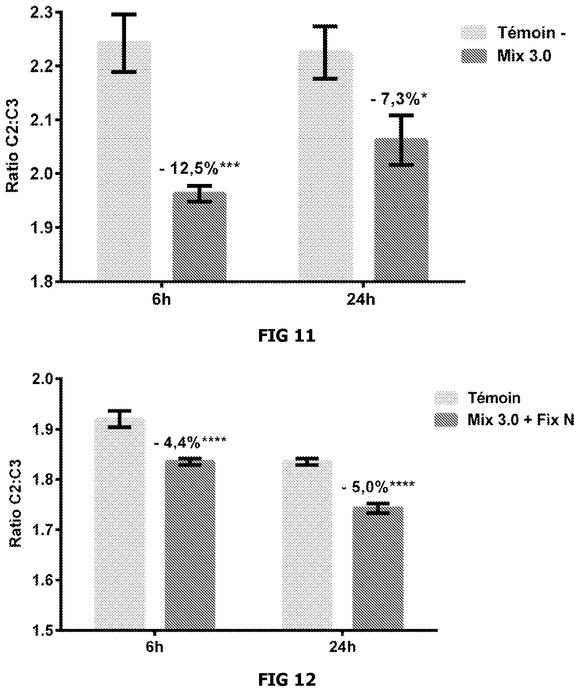

Après 6 et 24h de fermentation, la composition selon l'invention augmente significativement la production de C3 (p=0,0014 ou p< 0,001) respectivement de 15,6%, de 3,3% et de 7,4% par rapport au témoin - (figures 9 et 10). Les compositions selon l'invention testées orientent les voies de fermentation du C3. Cette orientation est confirmée par la réduction du ratio C2/C3 avec la composition selon l'invention (p<0,001 et p<0,0001) cf. figures 11 et 12. En favorisant la production de C3, la composition selon l'invention permet de fournir plus d'énergie à l'animal. De plus, dans le cas des vaches laitières, le C3 est un précurseur essentiel de la glycogénèse qui devrait améliorer les performances de production.

### Suivi du niveau de N-NH₃

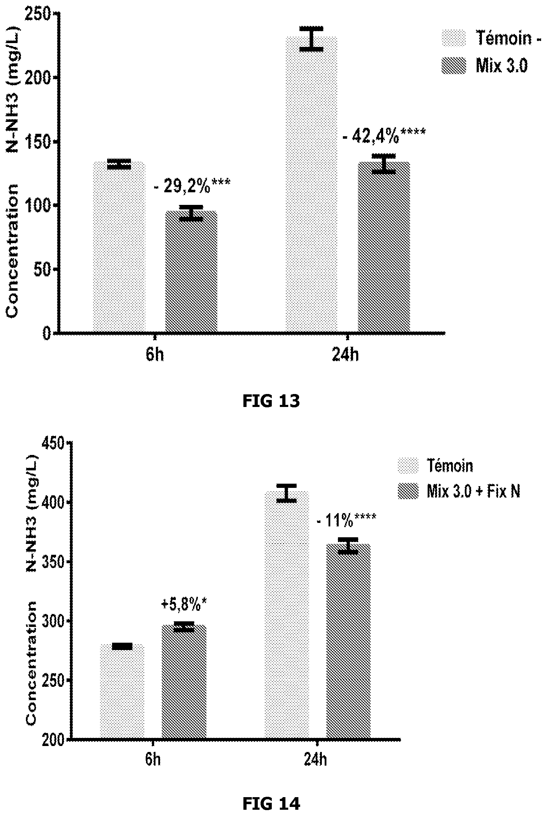

La composition selon l'invention a un effet significatif sur le niveau de N-NH₃ dans le milieu (p<0,001). L'apport de la composition selon l'invention représente une dose de 9,7 mg de N-NH₃/l ce qui est une partie négligeable par rapport à la ration. Cependant, la composition selon l'invention réduit le niveau d'azote dans le milieu (figures 13 et 14) ce qui pourrait mettre en évidence l'inhibition de la flore du rumen qui utilise les acides aminés et les peptides comme source d'énergie. Il s'agit des protozoaires dont la réduction améliore l'efficacité de l'azote par recyclage du N et synthèse de protéines microbienne. Ceci n'est pas le cas de la composition comparative ne contenant que du CDS et du DDGs (figure 24 : Mix2.0 : exemple comparatif 1) dont les effets sur le niveau de N-NH₃ dans le milieu ne sont pas significatifs.

### Paramètres de la ration

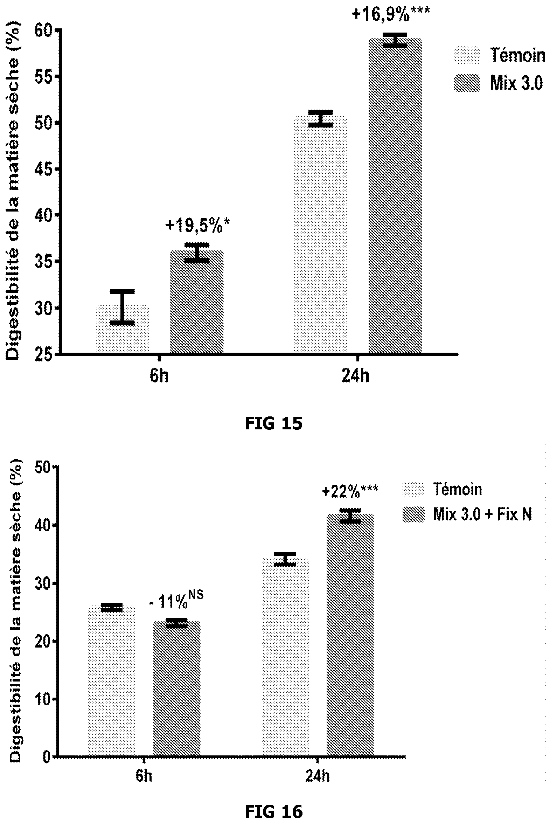

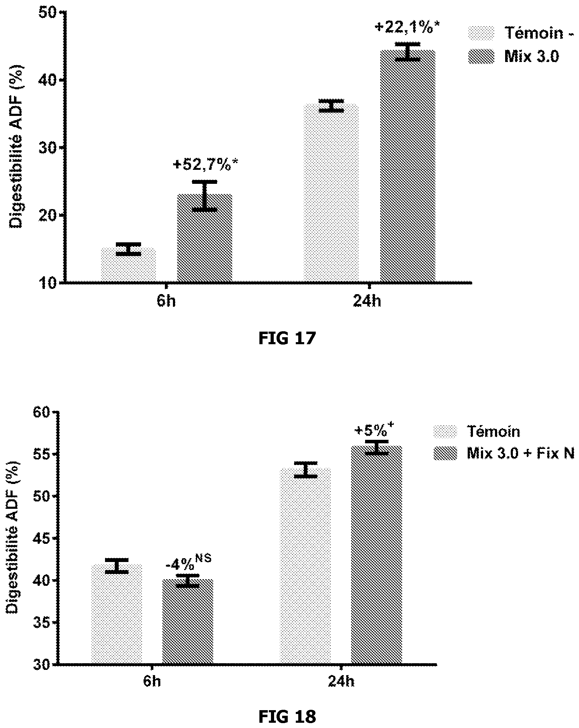

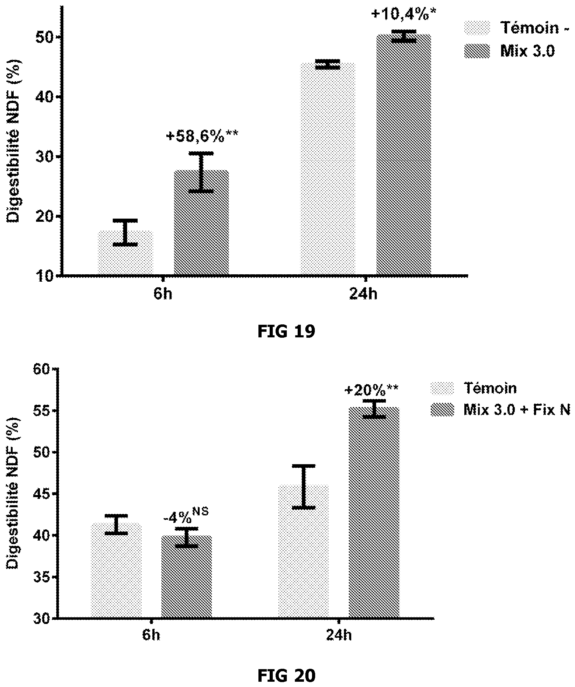

Les figures 15 à 20 présentent les digestibilités de la matière sèche (dMS), de l'ADF (dADF) et du NDF (dNDF) lors de la fermentation. Le tableau 3 ci-dessous présente les digestibilités de l'ADF (dADF) et du NDF (dNDF) lors de la fermentation dans le cas des exemples 6 à 8.

**Tableau 3**

| | | **Témoin** | **Ex 6** | **Ex 7** | **Ex 8** |
|---|---|---|---|---|---|
| **dNDF** | **6h** | 20,77% | **33,49%** | **24,08%** | **28,42%** |
| **dADF** | **6h** | 11,22% | **19,42%** | **-** | **21,90%** |

La composition selon l'invention permet d'améliorer la dMS (p=0,003 ou p< 0,001). La ration est donc mieux consommée par la flore du rumen qu'elle soit cellulolytique ou amylolytique. La composition selon l'invention augmente également la dADF (p=0,0058) et la dNDF (p=0,005) (figures et tableau 3). Elle favorise la dégradation et l'utilisation des fibres de la ration dans ce cas riche en fourrage (80%) avec de l'ensilage de maïs et du foin.

### CONCLUSION

L'effet de la composition selon l'invention sur les fermentations du rumen et la dégradation de la ration en conditions physiologiques a donc pu être évalué. Cette composition permet donc un fonctionnement optimal du rumen. Elle réduit la production de gaz, en particulier en CH₄. Elle inhibe une partie de la flore, les protozoaires qui sont associés aux bactéries méthanogènes. Cette défaunation permet de limiter les émissions de CH₄ réduisant ainsi les pertes d'énergie pour l'animal. En effet, elle améliore la production d'acide propionique (C3). Cette voie de fermentation produit l'un des précurseurs essentiels pour les performances des vaches laitières. La réduction du niveau de N-NH₃ se traduit par une baisse de la dégradation des protéines de la ration qui est en partie due à la réduction des protozoaires. En effet, la défaunation contribue à améliorer l'efficacité de l'azote par recyclage du N et augmentation de la synthèse des protéines microbienne. La composition selon l'invention améliore significativement la dégradation de la ration. En effet, les digestibilités de la matière sèche (MS) et des fibres (NDF et ADF) augmentent par rapport au témoin sans supplémentation. Ce produit permet une meilleure utilisation et dégradation de la fibre par la flore du rumen. En revanche l'utilisation de CDS et du DDGs seuls (Exemple comparatif 1) montre un effet non significatif sur le pH et le niveau de N-NH₃ ce qui démontre bien que l'utilisation de ces seuls composés n'est pas suffisante pour améliorer de façon significative le métabolisme microbien et donc l'utilisation des rations.

## Revendications

1. Composition pour la nutrition d'un mammifère non humain, avantageusement un herbivore comprenant un mélange de co-produits de distillation de céréales ou de fabrication de la bière avec ou sans solubles (DDG et DDGS), de solubles de céréales concentrés (CDS) et un mélange de fibres prébiotiques, de probiotiques, d'acides aminés, de protéines, d'oméga 3, de lignane, et d'enzymes digestives obtenu à partir de blé, d'avoine, de malt d'orge, de lin, de farine de lin et de la levure alimentaire *Saccharomyces cerevisiae,* lesdites céréales étant fermentées à l'aide de ladite levure alimentaire *Saccharomyces cerevisiae.*

2. Composition selon la revendication 1, **caractérisée en ce que** le ratio massique entre les solubles de céréales concentrés et les co-produits de distillation de céréales ou de fabrication de la bière avec ou sans solubles est compris entre 1/1 et 5/1, avantageusement entre 2/1 et 4/1.

3. Composition selon l'une quelconque des revendications 1 ou 2, **caractérisée en ce que** les solubles de céréales concentrés représentent de 41 à 80%, avantageusement de 65 à 75%, en poids du poids total de la composition.

4. Composition selon l'une quelconque des revendications 1 à 3, **caractérisée en ce que** les co-produits de distillation de céréales ou de fabrication de la bière avec ou sans solubles représentent de 15 à 40%, avantageusement 21 à 28%, en poids du poids total de la composition.

5. Composition selon l'une quelconque des revendications 1 à 4, **caractérisée en ce qu'**il comprend en outre un ou plusieurs ingrédients choisis parmi les huiles essentielles, les extraits de plantes, les humates telle que la Léonardite, la tourbe, les aluminosilicates, le tannin, la graine de lin, les polyphénols, les saponines, les algues et les extraits d'algues tels que microalgues comme la spiruline ou des macroalgues par exemple vertes, rouges ou brunes, le produit de la fermentation d'*Aspergillus oryzae* et leurs mélanges.

6. Composition selon l'une quelconque des revendications 1 à 5, **caractérisée en ce que** les fibres prébiotiques sont choisies parmi les fructo-oligosaccharides, l'inuline, les mannane-oligosaccharides, les bêta-glucannes, les arabino-xylo-oligosaccharides, les xylo-oligosaccharides, et leurs mélanges.

7. Composition selon l'une quelconque des revendications 1 à 6, **caractérisée en ce que** les enzymes digestives sont un mélange d'enzymes amylolytiques, fibrolytiques, protéolytiques et phospholytiques.

8. Composition selon l'une quelconque des revendications 1 à 7, **caractérisée en ce que** les probiotiques sont la *Saccharomyces cerevisiae.*

9. Composition selon l'une quelconque des revendications 1 à 7, **caractérisée en ce que** les protéines sont un mélange de protéines de blé, de protéines d'avoine, de protéines de lin et de protéines du malt d'orge.

10. Composition selon l'une quelconque des revendications 1 à 9, **caractérisée en ce que** le mammifère est un ruminant.

11. Composition selon l'une quelconque des revendications 1 à 10, **caractérisée en ce qu'**elle est ajoutée à la ration journalière du mammifère à raison de 40 à 50 g de composition pour 1 kg de ration.

12. Seau nutritionnel pour un mammifère non humain comprenant 20 à 30% en poids de la composition selon l'une quelconque des revendications 1 à 11 par rapport au poids total du seau.

13. Seau nutritionnel selon la revendication 12, **caractérisé en ce qu'**il contient, du phosphate monocalcique, une source de sodium tel que du chlorure de sodium, une source de calcium, une source de magnésium, et/ou des oligo-éléments, et éventuellement des vitamines.

14. Seau nutritionnel selon l'une quelconque des revendications 12 ou 13, **caractérisé en ce qu'**il ne contient pas de mélasse.

15. Seau nutritionnel selon l'une quelconque des revendications 12 à 14, **caractérisé en ce qu'**il comprend entre 4 et 9% de co-produits de distillation de céréales ou de fabrication de la bière avec ou sans solubles, avantageusement entre 5 et 7%, en poids par rapport au poids total du seau, et entre 12 et 24% de solubles de céréales concentrés, avantageusement entre 15 et 20%, en poids par rapport au poids total du seau.

16. Utilisation d'une composition selon l'une quelconque des revendications 1 à 11 ou d'un seau nutritionnel selon l'une quelconque des revendications 12 à 15, pour améliorer les performances zootechniques d'un mammifère non humain, en particulier d'un ruminant.

17. Utilisation d'une composition selon l'une quelconque des revendications 1 à 11 ou d'un seau nutritionnel selon l'une quelconque des revendications 12 à 15, pour augmenter la digestibilité de la matière sèche et des fibres, en particulier des fourrages et concentrés, et/ou améliorer l'indice de consommation et/ou l'efficacité alimentaire et/ou favoriser le gain de poids et/ou augmenter l'intensité de la fermentation et du métabolisme microbien et/ou réduire l'émission de gaz, en particulier de méthane, et/ou inhiber les protozoaires de la flore et/ou diminuer la dégradation des protéines et/ou orienter les fermentations vers la production des acides gras volatils, en particulier vers l'acide propionique, chez un mammifère non humain, avantageusement chez un ruminant.

## Patentansprüche

1. Zusammensetzung für die Ernährung eines nicht-menschlichen Säugetiers, vorteilhafterweise eines Pflanzenfressers, umfassend eine Mischung von Nebenprodukten aus der Destillation von Getreide oder aus der Herstellung von Bier mit oder ohne Solubles (DDG und DDGS), Condensed Distillers Solubles (CDS) und eine Mischung aus präbiotischen Fasern, Probiotika, Aminosäuren, Proteinen, Omega-3, Lignan und Verdauungsenzymen, gewonnen aus Weizen, Hafer, Gerstenmalz, Flachs, Leinsaatmehl und der Nährhefe *Saccharomyces cerevisiae,* wobei das Getreide mit Hilfe der Nährhefe *Saccharomyces cerevisiae* fermentiert wird.

2. Zusammensetzung nach Anspruch 1, **dadurch gekennzeichnet, dass** das Massenverhältnis zwischen den Condensed Distillers Solubles und den Nebenprodukten aus der Destillation von Getreide oder aus der Herstellung von Bier mit oder ohne Solubles zwischen 1/1 und 5/1, vorteilhafterweise zwischen 2/1 und 4/1 liegt.

3. Zusammensetzung nach einem der Ansprüche 1 oder 2, **dadurch gekennzeichnet, dass** die Condensed Distillers Solubles 41 bis 80 Gew.-%, vorteilhafterweise 65 bis 75 Gew.-% des Gesamtgewichts der Zusammensetzung ausmachen.

4. Zusammensetzung nach einem der Ansprüche 1 bis 3, **dadurch gekennzeichnet, dass** die Nebenprodukte aus der Destillation von Getreide oder aus der Herstellung von Bier mit oder ohne Solubles 15 bis 40 Gew.-%, vorteilhafterweise 21 bis 28 Gew.-%, des Gesamtgewichts der Zusammensetzung ausmachen.

5. Zusammensetzung nach einem der Ansprüche 1 bis 4, **dadurch gekennzeichnet, dass** sie ferner einen oder mehrere Bestandteile umfasst, die aus ätherischen Ölen, Pflanzenextrakten, Humaten, wie Leonardit, Torf, Aluminosilikaten, Tannin, Leinsamen, Polyphenolen, Saponinen, Algen und Algenextrakten, wie Mikroalgen, wie Spirulina, oder Makroalgen, beispielsweise grünen, roten oder braunen, dem Produkt der Fermentation von *Aspergillus oryzae* sowie deren Mischungen ausgewählt sind.

6. Zusammensetzung nach einem der Ansprüche 1 bis 5, **dadurch gekennzeichnet, dass** die präbiotischen Fasern ausgewählt sind aus Fructooligosacchariden, Inulin, Mannan-Oligosacchariden, Beta-Glucanen, Arabino-Xylo-Oligosacchariden, Xylo-Oligosacchariden und deren Mischungen.

7. Zusammensetzung nach einem der Ansprüche 1 bis 6, **dadurch gekennzeichnet, dass** die Verdauungsenzyme eine Mischung aus amylolytischen, fibrolytischen, proteolytischen und phospholytischen Enzymen sind.

8. Zusammensetzung nach einem der Ansprüche 1 bis 7, **dadurch gekennzeichnet, dass** die Probiotika *Saccharomyces cerevisiae* sind.

9. Zusammensetzung nach einem der Ansprüche 1 bis 7, **dadurch gekennzeichnet, dass** die Proteine eine Mischung aus Weizenproteinen, Haferproteinen, Flachsproteinen und Gerstenmalzproteinen sind.

10. Zusammensetzung nach einem der Ansprüche 1 bis 9, **dadurch gekennzeichnet, dass** das Säugetier ein Wiederkäuer ist.

11. Zusammensetzung nach einem der Ansprüche 1 bis 10, **dadurch gekennzeichnet, dass** sie der täglichen Ration des Säugetiers in einem Umfang von 40 bis 50 g Zusammensetzung pro 1 kg Ration zugesetzt wird.

12. Nahrungseimer für ein nicht-menschliches Säugetier, umfassend 20 bis 30 Gew.-% der Zusammensetzung nach einem der Ansprüche 1 bis 11, bezogen auf das Gesamtgewicht des Eimers.

13. Nahrungseimer nach Anspruch 12, **dadurch gekennzeichnet, dass** er Monocalciumphosphat, eine Natriumquelle, wie Natriumchlorid, eine Calciumquelle, eine Magnesiumquelle und/oder Spurenelemente sowie eventuell Vitamine enthält.

14. Nahrungseimer nach einem der Ansprüche 12 oder 13, **dadurch gekennzeichnet, dass** er keine Melasse enthält.

15. Nahrungseimer nach einem der Ansprüche 12 bis 14, **dadurch gekennzeichnet, dass** er zwischen 4 und 9 Gew.-% Nebenprodukte aus der Destillation von Getreide oder aus der Herstellung von Bier mit oder ohne Solubles, vorteilhafterweise zwischen 5 und 7 Gew.-%, bezogen auf das Gesamtgewicht des Eimers sowie zwischen 12 und 24 Gew.-% Condensed Distillers Solubles, vorteilhafterweise zwischen 15 und 20 Gew.-%, bezogen auf das Gesamtgewicht des Eimers umfasst.

16. Verwendung einer Zusammensetzung nach einem der Ansprüche 1 bis 11 oder eines Nahrungseimers nach einem der Ansprüche 12 bis 15, zur Verbesserung der zootechnischen Leistungen eines nicht-menschlichen Säugetiers, insbesondere eines Wiederkäuers.

17. Verwendung einer Zusammensetzung nach einem der Ansprüche 1 bis 11 oder eines Nahrungseimers nach einem der Ansprüche 12 bis 15, zur Erhöhung der Verdaulichkeit von Trockenmasse und Fasern, insbesondere Futter und Konzentraten und/oder zur Verbesserung der Futterverwertung und/oder der Ernäherungseffizienz und/oder zur Begünstigung der Gewichtszunahme und/oder zur Erhöhung der Fermentationsintensität und des mikrobiellen Stoffwechsels und/oder zur Verringerung der Gasemission, insbesondere von Methan, und/oder zur Hemmung von Protozoen der Flora und/oder zur Verringerung des Abbaus von Proteinen und/oder zum Ausrichten der Fermentationen auf die Produktion flüchtiger Fettsäuren, insbesondere auf Propionsäure, bei einem nicht-menschlichen Säugetier, vorteilhafterweise bei einem Wiederkäuer.

## Claims

1. A composition for the nutrition of a non-human mammal, advantageously a herbivore, comprising a mixture of co-products from cereal distillation or from beer production with or without solubles (DDG and DDGS), concentrated distiller's solubles (CDS) and a mixture of prebiotic fibers, probiotics, amino acids, proteins, omega 3, lignan, and digestive enzymes obtained from wheat, oats, barley malt, flax, flax meal and the nutritional yeast *Saccharomyces cerevisiae,* said cereals being fermented with the aid of said nutritional yeast *Saccharomyces cerevisiae.*

2. A composition according to claim 1, **characterized in that** the weight ratio between the concentrated distiller's solubles and the co-products from cereal distillation or from beer production with or without solubles lies in the range 1/1 to 5/1, advantageously in the range 2/1 to 4/1.

3. A composition according to any one of claim 1 or 2, **characterized in that** the concentrated distiller's solubles represent 41% to 80%, advantageously 65% to 75%, by weight of the total weight of the composition.

4. A composition according to any one of claims 1 to 3, **characterized in that** the co-products from cereal distillation or from beer production with or without solubles represent from 15% to 40%, advantageously 21% to 28% by weight of the total weight of the composition.

5. A composition according to any one of claims 1 to 4, **characterized in that** it furthermore comprises one or more ingredients selected from essential oils, plant extracts, humates such as leonardite, peat, aluminosilicates, tannin, linseed, polyphenols, saponins, algae and extracts of algae such as microalgae, for example spirulina or macroalgae for example green, red or brown algae, the product of the fermentation of *Aspergillus oryzae,* and mixtures thereof.

6. A composition according to any one of claims 1 to 5, **characterized in that** the prebiotic fibers are selected from fructo-oligosaccharides, inulin, mannan-oligosaccharides, beta-glucans, arabino-xylo-oligosaccharides, xylo-oligosaccharides, and mixtures thereof.

7. A composition according to any one of claims 1 to 6, **characterized in that** the digestive enzymes are a mixture of amylolytic, fibrolytic, proteolytic and phospholytic enzymes.

8. A composition according to any one of claims 1 to 7, **characterized in that** the probiotics are *Saccharomyces cerevisiae.*

9. A composition according to any one of claims 1 to 7, **characterized in that** the proteins are a mixture of wheat proteins, oat proteins, flax proteins and barley malt proteins.

10. A composition according to any one of claims 1 to 9, **characterized in that** the mammal is a ruminant.

11. A composition according to any one of claims 1 to 10, **characterized in that** it is added to the daily ration of the mammal in an amount of 40 g to 50 g of composition per kg of ration.

12. A feed bucket for a non-human mammal, comprising 20% to 30% by weight of the composition according to any one of claims 1 to 11 relative to the total weight of the bucket.

13. A feed bucket according to claim 12, **characterized in that** it contains monocalcium phosphate, a source of sodium such as sodium chloride, a source of calcium, a source of magnesium and/or oligo-elements, and optionally vitamins.

14. A feed bucket according to any of claim 12 or 13, **characterized in that** it does not contain molasses.

15. A feed bucket according to any one of claims 12 to 14, **characterized in that** it comprises in the range 4% to 9% of co-products from cereal distillation or from beer production with or without solubles, advantageously in the range 5% to 7%, by weight relative to the total weight of the bucket, and in the range 12% to 24% of concentrated distiller's solubles, advantageously in the range 15% to 20%, by weight relative to the total weight of the bucket.

16. Use of a composition according to any one of claims 1 to 11 or of a feed bucket according to any one of claims 12 to 15, to improve the zootechnical performances of a non-human mammal, in particular of a ruminant.

17. Use of a composition according to any one of claims 1 to 11 or of a feed bucket according to any one of claims 12 to 15, to increase the digestibility of the dry matter and fibers, in particular fodder and concentrates, and/or to improve the consumption index and/or the nutritional efficiency and/or to promote weight gain and/or to increase the intensity of fermentation and of microbial metabolism and/or to reduce the emission of gas, in particular methane, and/or to inhibit protozoa of the flora and/or to reduce the degradation of the proteins and/or to direct the fermentations towards the production of volatile fatty acids, in particular towards propionic acid, in a non-human mammal, advantageously in a ruminant.
